(19) Europäisches Patentamt
European Patent Office
Office européen des brevets

(11) **EP 4 712 354 A1**

(12) **EUROPEAN PATENT APPLICATION**

(43) Date of publication:
**18.03.2026 Bulletin 2026/12**

(51) International Patent Classification (IPC):
**H04B 1/04** (2006.01)

(21) Application number: **25191478.4**

(52) Cooperative Patent Classification (CPC):
**H04B 1/04**

(22) Date of filing: **24.07.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.08.2024 US 202463685263 P**
**24.10.2024 US 202463711573 P**

(71) Applicant: **TRON FUTURE TECH INC.**
**Hsinchu City 30069 (TW)**

(72) Inventors:
• **KE, Cheng-Yung**
**30069 Hsinchu City (TW)**
• **WANG, Yu-Jiu**
**30069 Hsinchu City (TW)**

(74) Representative: **Casalonga**
**Casalonga & Partners**
**Bayerstraße 71/73**
**80335 München (DE)**

(54) **COMMUNICATION SYSTEM**

(57) The present application discloses a communication system including a digitized subarray, a data generator, a modulator, a digitized control unit, and a signal generation unit. The digitized subarray includes a plurality of first transmitters, each including a power amplifier for amplifying an RF signal and an antenna element for transmitting the RF signal amplified by the first power amplifier. The data generator produces a digital data for transmission, and the modulator converts the digital data into a symbol according to a predetermined signal modulation scheme. The digitized control unit selects a portion of the first transmitters in the digitized subarray for performing amplification and transmission according to an amplitude of the symbol. The signal generation unit generates the RF signal and provides the RF signal to the selected portion of first transmitters according to the symbol.

FIG. 5

**Description**

## TECHNICAL FIELD

The present disclosure relates to a communication system, and more particularly, to a phased array communication system with independent power amplifier control.

## BACKGROUND

A phased array includes a group of antennas whose signals are combined to direct radio waves in specific directions without physically moving the antennas. Specifically, by adjusting a phase of a signal at each antenna, the phased array is able to rapidly steer a direction of a signal beam. Such capability enables the antennas to be applied in a broad range of applications from radar and satellite communications to advanced wireless networks.

When the phased array serves as a transmitter in a communication system, power efficiency is a crucial performance indicator, and a power amplifier plays an important role in determining the power efficiency. The power amplifier (PA) can elevate low-power signals to levels suitable for transmission through antennas. The performance of the phased array is heavily reliant on the efficiency and linearity of its PAs. Typically, the power amplifier operates in two modes: a linear mode and a saturation mode. In the linear mode, the power amplifier maintains linearity between its input and output signals, resulting in low distortion. However, this reduces the efficiency, as the power amplifier is unable to deliver maximum output power. In the saturation mode, the power amplifier can achieve maximum output power, which translates to greater efficiency, but also introduces greater distortion, which can adversely affect signal quality. Therefore, optimizing a balance between the power efficiency and the linearity in the phased array system has become an issue to be solved.

This Discussion of the Background section is provided for background information only. The statements in this Discussion of the Background are not an admission that the subject matter disclosed in this section constitutes prior art to the present disclosure, and no part of this Discussion of the Background section may be used as an admission that any part of this application, including this Discussion of the Background section, constitutes prior art to the present disclosure.

## SUMMARY

One aspect of the present disclosure provides a communication system. The communication system includes a digitized subarray, a data generator, a modulator, a digitized control unit, and a signal generation unit. The digitized subarray includes a plurality of transmitters, wherein each of the transmitters includes a power amplifier and an antenna element. The power amplifier amplifies a radio frequency (RF) signal, and the antenna element is coupled to the power amplifier and transmits the RF signal amplified by the power amplifier. The data generator produces a digital data for transmission. The modulator converts the digital data into a symbol according to a predetermined signal modulation scheme. The digitized control unit selects a portion of the transmitters in the digitized subarray for performing amplification and transmission according to an amplitude of the symbol. The signal generation unit generates an RF signal and provides the RF signal to the selected portion of transmitters according to the symbol.

Another aspect of the present disclosure provides a method for signal transmission through a communication system. The communication system includes a digitized subarray including a plurality of transmitters, wherein each of the transmitters includes a first power amplifier and a first antenna element coupled to the first power amplifier. The method includes producing a digital data for transmission, converting the digital data into a symbol according to a predetermined signal modulation scheme, selecting a portion of the transmitters in the digitized subarray for performing amplification and transmission according to an amplitude of the symbol, and generating, according to the symbol, a radio frequency (RF) signal and providing the RF signal to the selected portion of transmitters.

## BRIEF DESCRIPTION OF THE DRAWINGS

The details of the present application will be more readily understandable by way of reading the embodiments with the accompanying drawings below. It should be noted that, according to standard practice in industry, the various features in the drawings are not necessarily drawn to scales. In fact, for clear illustrations, dimensions of some features may be intentionally enlarged or reduced.

FIG. 1 shows a phased array according to one embodiment of the present disclosure.

FIG. 2 shows a power amplifier from the phased array in FIG. 1 according to one embodiment of the present disclosure.

FIG. 3 shows a transfer characteristic curve of the power amplifier from the phased array in FIG. 1.

FIG. 4 shows a constellation diagram of quadrature amplitude modulation (QAM) according to one embodiment of the present disclosure.

FIG. 5 shows a communication system according to one embodiment of the present disclosure.

FIG. 6 shows a distribution of transmitters selected to transmit a first RF signal according to some embodiments of the present disclosure.

FIG. 7 shows a distribution of transmitters selected to transmit a second RF signal according to some embodiments of the present disclosure.

FIG. 8 shows a communication system according to another embodiment of the present disclosure.

FIG. 9 shows a distribution of transmitters in a digitized subarray and a fine-tuning subarray according to some embodiments of the present disclosure.

FIG. 10 shows a distribution of transmitters in a digitized subarray and a fine-tuning subarray according to another embodiment of the present disclosure.

FIG. 11 shows a communication system according to another embodiment of the present disclosure.

FIG. 12 shows a distribution of transmitters in a digitized subarray and a fine-tuning subarray of the communication system in FIG. 11 according to one embodiment of the present disclosure.

FIG. 13 shows a distribution of the transmitters in the digitized subarray and the fine-tuning subarray of the communication system in FIG. 11 according to another embodiment of the present disclosure.

FIG. 14 shows a distribution of the transmitters in the digitized subarray and the fine-tuning subarray of the communication system in FIG. 11 according to another embodiment of the present disclosure.

FIG. 15 shows a flowchart of a method for signal transmission according to one embodiment of the present disclosure.

## DETAILED DESCRIPTION

The following description of the disclosure accompanies drawings, which are incorporated in and constitute a part of this specification, and which illustrate embodiments of the disclosure, but the disclosure is not limited to the embodiments. In addition, the following embodiments can be properly integrated to complete another embodiment.

References to "some embodiments," "an embodiment," "exemplary embodiment," "other embodiments," "another embodiment," etc. indicate that the embodiment(s) of the disclosure so described may include a particular feature, structure, or characteristic, but not every embodiment necessarily includes the particular feature, structure, or characteristic. Further, repeated use of the phrase "in the embodiment" does not necessarily refer to the same embodiment, although it may.

In order to make the present disclosure completely comprehensible, detailed steps and structures are provided in the following description. Obviously, implementation of the present disclosure does not limit special details known by persons skilled in the art. In addition, known structures and steps are not described in detail, so as not to unnecessarily limit the present disclosure. Preferred embodiments of the present disclosure will be described below in detail. However, in addition to the detailed description, the present disclosure may also be widely implemented in other embodiments. The scope of the present disclosure is not limited to the detailed description, and is defined by the claims.

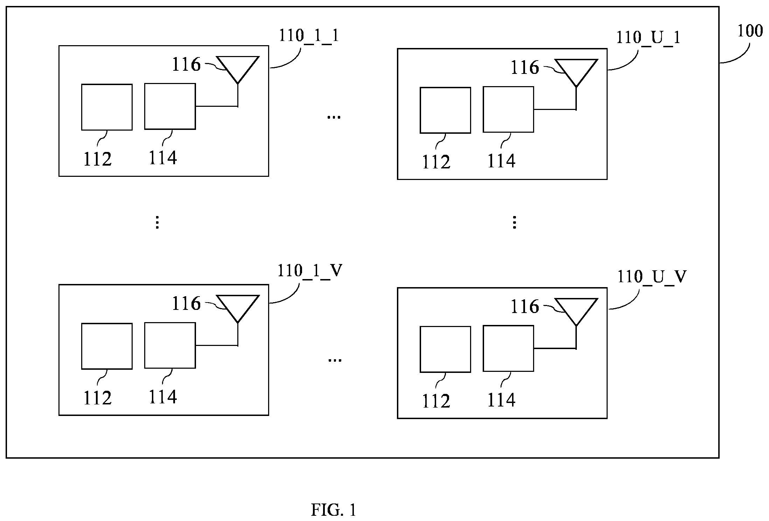

FIG. 1 shows a phased array 100 according to one embodiment of the present disclosure. The phased array 100 includes a plurality of array elements 110_1_1 to 110_U_V arranged in a UxV array, where U and V are positive integers.

In the present embodiment, the phased array 100 can be employed at a transmitting end, and each of the array elements 110_1_1 to 110_U_V can be implemented as an RF transmitter. Each of the array elements 110_1_1 to 110_U_V can include a phase shifter 112, a power amplifier 114, and an antenna element 116. The phase shifters 112 can shift a phase of an RF signal received by the array element, and the power amplifier 114 can amplify a low-power RF signal to have a higher power level so as to facilitate transmission through the antenna element 116. In some embodiments, the array elements 110_1_1 to 110_U_V may receive a same RF signal; however, by manipulating, using the phase shifters 112, relative phases of the RF signal fed to the array elements 110_1_1 to 110_U_V, an effective radiation pattern of the phased array 100 can be strengthened in a desired direction and suppressed in undesired directions, so that a signal beam can be steered without physically moving the array elements 110_1_1 to 110_U_V.

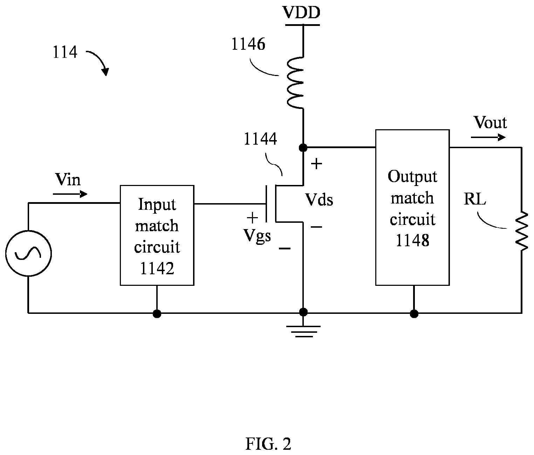

FIG. 2 shows the power amplifier 114 according to one embodiment of the present disclosure. The power amplifier 114 includes an input match circuit 1142, a transistor 1144, an inductor 1146, and an output match circuit 1148.

The input match circuit 1142 provides a matched input impedance for receiving an input voltage Vin. The transistor 1144 serves as a core for amplification by driving a larger current according to a voltage received by its gate, and the inductor 1146 helps to tune the power amplifier 114 and improve the efficiency. The output match circuit 1148 provides a matched output impedance so as to allow the power amplifier 114 to efficiently output an output voltage Vout to a load. In FIG. 2, the load is represented as an effective resistor RL.

During an amplification by the power amplifier 114, as the input voltage Vin varies, the transistor 1144 may operate in either a linear mode or a saturation mode. Specifically, when a drain-to-source voltage Vds is less than a gate-to-source voltage Vgs minus a threshold voltage Vth of the transistor 1144 (i.e., when Vds < Vgs - Vth), the transistor 1144 operates in the linear mode. In contrast, when the drain-to-source voltage Vds is greater than the gate-to-source voltage Vgs minus the threshold voltage Vth of the transistor 1144 (i.e., Vds > Vgs - Vth), the transistor 1144 operates in the saturation mode.

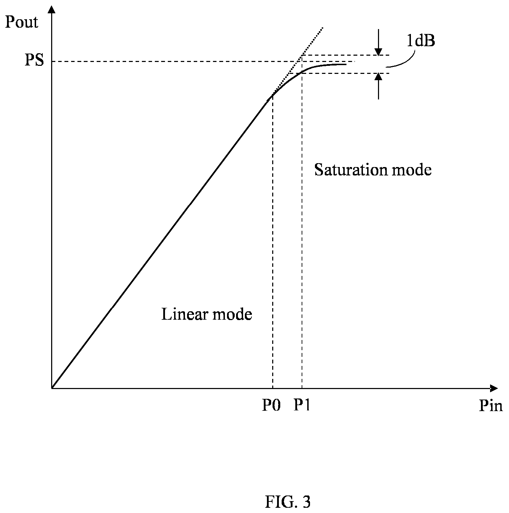

As the transistor 1144 operates in different modes, the power amplifier 114 also exhibits different characteristics. FIG. 3 shows a transfer characteristic curve of the power amplifier 114. As shown in FIG. 3, when an input power is less than a power value P0, a gain of the power amplifier 114 remains approximately at a fixed value, resulting in a linearity between an output power and the input power. At such point, the power amplifier 114 can be considered to be operating in the linear mode. However, when the input power exceeds the power value P0 (i.e., a compression point), the output power begins to approach a saturation power value PS, and the gain of the power amplifier 114 starts to decline. As a result, a relationship between the output power and the input power is no longer linear. In the present disclosure, when the input power reaches a power value P1, the output power becomes less than 1 dB compared to a linear output power value (i.e., the power value indicated by a diagonal dotted line), the power amplifier 114 can be regarded as entering the saturation mode.

Generally, when the power amplifier 114 operates in the linear mode, the power amplifier 114 causes less distortion but also has less power efficiency. Comparatively, when the power amplifier 114 operates in the saturation mode, the power amplifier 114 has greater power efficiency but also causes more distortion.

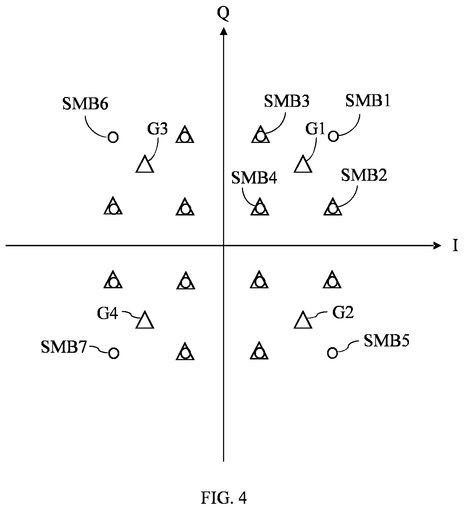

FIG. 4 shows a constellation diagram of quadrature amplitude modulation (QAM) according to one embodiment of the present disclosure. In FIG. 4, circles represent ideal symbols of 16-QAM and triangles represent actual symbols transmitted by the phased array 100. As shown in FIG. 4, 16 symbols are arranged in a grid pattern, and each point represents a corresponding bit data by a unique combination of an In-phase component (i.e., an I component) and a Quadrature component (i.e., a Q component). In some embodiments, each symbol can also be described using polar coordinates, thereby allowing each symbol to be characterized by its radial distance (i.e., an amplitude of the symbol), and its angle (i.e., a phase of the symbol). For example, symbols SMB1, SMB2, SMB3 and SMB4 may represent bit values "1000," "1001," "1100" and "1101," respectively, with different amplitudes and different phases. In such case, by analyzing the phases and amplitudes of RF signals, a receiver is able to obtain digital data represented by the RF signals.

In the case shown in FIG. 4, since the power amplifiers 114 mostly operate in the linear mode, symbols transmitted by the phased array 100 can basically match ideal symbols (e.g., most of the triangles overlap with the circles). However, when transmitted symbols have greater amplitudes, such as symbols SMB1, SMB5, SMB6 and SMB7, the power amplifiers 114 may enter the saturation mode, which causes more distortion due to gain reduction. As a result, symbols G1, G2, G3 and G4 transmitted by the phased array 100 that have greater amplitudes may move inward in the constellation diagram, making it difficult to distinguish between different symbols in nearby regions. For example, compared to the symbol SMB1, the symbol G1 transmitted by the phased array 100 is closer to the symbols SMB2, SMB3 and SMB4, and thus, it is more challenging for a receiver to distinguish the symbol G1 from the nearby symbols SMB2, SMB3 and SMB4.

Furthermore, since the power amplifier 114 in each of the array elements 110_1_1 to 110_U_V primarily operates in the linear mode, the power efficiency of the phased array 100 is relatively low, leading to excessive power consumption and thermal issues that require cooling solutions to maintain performance and reliability. To improve the power efficiency without losing the linearity between the input signals and the output signals, the present disclosure provides communication systems that allow the power amplifiers in transmitters to operate in the saturation mode and control the transmitters in a digitized manner so as to optimize the power efficiency and reduce the distortion.

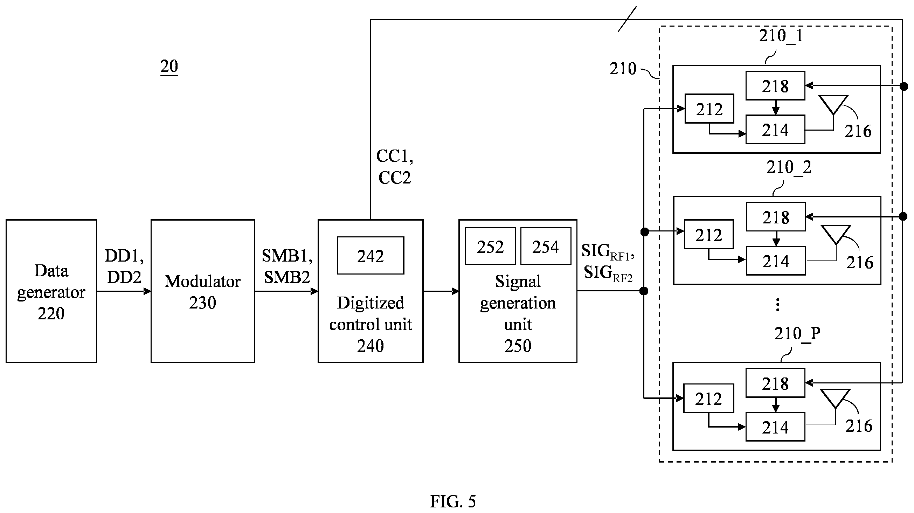

FIG. 5 shows a communication system 20 according to one embodiment of the present disclosure. The communication system 20 includes a digitized subarray 210, a data generator 220, a modulator 230, a digitized control unit 240, and a signal generation unit 250.

The digitized subarray 210 includes a plurality of transmitters 210_1 to 210_P, wherein each of the transmitters 210_1 to 210_P includes a phase shifter 212, a power amplifier 214 and an antenna element 216. The power amplifier 214 can amplify an RF signal $SIG_{RF1}$ received by the transmitter. The antenna element 216 can be coupled to the power amplifier 214 and transmit the RF signal SIG$_{RF1}$ amplified by the power amplifier 214. In some embodiments, the transmitters 210_1 to 210_P can be arranged as a phased array, and the phase shifter 212 can shift a phase of the RF signal SIG$_{RF1}$ before transmission according to a desired radiation pattern so as to steer a signal beam.

The data generator 220 can produce a digital data DD1 to be transmitted, and the modulator 230 can convert the digital data DD1 into a symbol SMB1 according to a predetermined signal modulation scheme. In some embodiments, the predetermined signal modulation scheme may include amplitude shift keying (ASK), quadrature amplitude modulation (QAM), phase shift keying (PSK), amplitude-phase shift keying (APSK), or another suitable modulation scheme depending on desired transmission characteristics.

The digitized control unit 240 can select a portion of the transmitters 210_1 to 210_P for performing amplification and transmission according to an amplitude of the symbol SMB1, and the signal generation unit 250 can generate the RF signal SIG$_{RF1}$ and provide the RF signal SIG$_{RF1}$ to the selected portion of the transmitters 210_1 to 210_P according to the symbol SMB1. In the present embodiment, the signal generation unit 250 can generate the RF signal SIG$_{RF1}$ according to the symbol SMB1 so as to ensure that the power amplifiers 214 in the selected portion of the transmitters 210_1 to 210_P will enter the saturation mode during amplification. Since the power amplifiers 214 in the selected transmitters can amplify the RF signal SIG$_{RF1}$ in the saturation mode, the power amplifiers 214 in the selected transmitters can deliver a maximum output power with minimal energy loss, thereby ensuring high power added efficiency (PAE) of the communication system 20. In the present embodiment, because the power amplifiers 214 in the transmitters 210_1 to 210_P are either enabled to reach the saturation state (when selected) or disabled (when not selected), the transmitters 210_1 to 210_P can be deemed to be controlled digitally.

Specifically, for symbols having different amplitudes, the digitized control unit 240 may select different portions of the transmitters 210_1 to 210_P (e.g., different numbers of transmitters) for performing amplification and transmission. For example, when the data generator 220 generates another digital data DD2 for transmission, the modulator 230 can convert the digital data DD2 into a symbol SMB2. Subsequently, the digitized control unit 240 can select a portion of the transmitters 210_1 to 210_P for performing amplification and transmission according to an amplitude of the symbol SMB2, and the signal generation unit 250 can generate the RF signal SIG$_{RF2}$ and provide the RF signal SIG$_{RF2}$ to the selected portion of the transmitters 210_1 to 210_P according to the symbol SMB2.

In such case, if the amplitude of the symbol SMB2 is different from the amplitude of the symbol SMB1, then the digitized control unit 240 can select another portion of the transmitters 210_1 to 210_P for performing amplification and transmission. For example, if the amplitude of the symbol SMB1 is greater than the amplitude of the symbol SMB2, then a number of transmitters selected by the digitized control unit 240 for amplifying the RF signal SIG$_{RF1}$ would be greater than a number of transmitters selected by the digitized control unit 240 for amplifying the RF signal SIG$_{RF2}$. Otherwise, if the amplitude of the symbol SMB1 is less than the amplitude of the symbol SMB2, then the number of transmitters selected by the digitized control unit 240 for amplifying the RF signal SIG$_{RF1}$ would be less than the number of transmitters selected by the digitized control unit 240 for amplifying the RF signal SIG$_{RF2}$. Furthermore, in some embodiments, if the amplitude of the symbol SMB1 is same as the amplitude of the symbol SMB2, then a same portion of the transmitters 210_1 to 210_P can be selected for performing amplification and transmission.

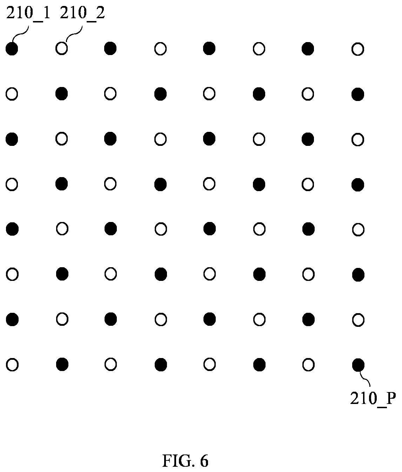

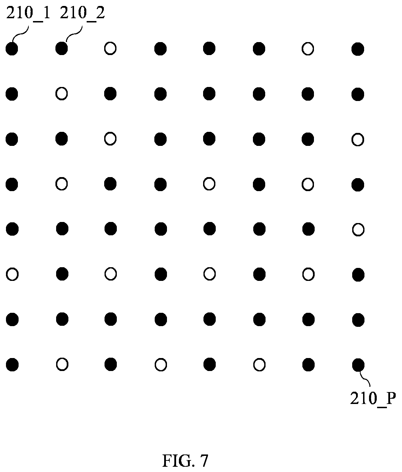

FIG. 6 shows a distribution of transmitters selected to transmit the RF signal SIG$_{RF1}$ according to some embodiments of the present disclosure, and FIG. 7 shows a distribution of transmitters selected to transmit the RF signal SIG$_{RF2}$ according to some embodiments of the present disclosure. In FIGS. 6 and 7, hollow circles represent the transmitters that are selected for transmitting the RF signal SIG$_{RF1}$, and the solid circles represent transmitters that are not selected for performing amplification and transmission. In the present embodiment, the communication system 20 includes 64 transmitters, that is, P=64, and the transmitters 210_1 to 210_P are arranged as an 8x8 square on a same plane. However, the present disclosure is not limited thereto. In some other embodiments, the transmitters 210_1 to 210_P may be arranged in a different way (e.g., the transmitters 210_1 to 210_P may be arranged in different shapes or disposed on different planes) according to requirements.

In the present embodiment, since the amplitude of the symbol SMB1 is greater than the amplitude of the symbol SMB2, a number of the transmitters selected to transmit the RF signal SIG$_{RF1}$ (e.g., 32 transmitters) is greater than a number of the transmitters selected to transmit the RF signal SIG$_{RF2}$ (e.g., 16 transmitters), as shown in FIGS. 6 and 7. Furthermore, to optimize a radiation pattern of the transmission, the transmitters to be used for transmitting the RF signal SIG$_{RF1}$ and the transmitters to be used for transmitting the RF signal SIG$_{RF2}$ can be selected independently so as to ensure that the selected transmitters can be distributed evenly among all of the transmitters 210_1 to 210_P, thereby facilitating a beamforming. In such case, a transmitter selected for transmitting the RF signal SIG$_{RF2}$ may not be selected to transmit the RF signal SIG$_{RF1}$, and vice versa.

In some embodiments, the digitized control unit 240 may include an encoder 242 that converts the amplitude of the symbol into a control code, and each of the transmitters 210_1 to 210_P may further include a decoder 218 that can decode the control code so as to enable or disable the power amplifier 214 therein accordingly. In such case, the RF signal generated by the signal generation unit 250 can be transmitted to all of the transmitters 210_1 to 210_P through a signal divider (not shown in FIG. 5), and the portion of transmitters 210_1 to 210_P desired for performing amplification and transmission can be selected through the encoder 242 and the decoders 218.

For example, if a maximum amplitude is 1 and an amplitude of the symbol SMB1 is 0.5, then the encoder 242 may generate a control code CC1 as "100000." In such case, when receiving the control code "100000," the decoders 218 in the transmitters represented by the hollow circles in FIG. 6 can enable the power amplifier 214 therein (e.g., by turning on a switch between a power source and the power amplifier 214), and the decoders 218 in the transmitters represented by the solid circles in FIG. 6 can disable the power amplifier 214 therein (e.g., by turning off a switch between a power source and the power amplifier 214). Similarly, if the amplitude of the symbol SMB2 is 0.25, then the encoder 242 may generate a control code CC2 as "010000." In such case, when receiving the control code "010000," the decoders 218 in the transmitters represented by the hollow circles in FIG. 7 can enable the power amplifier 214 therein and the decoders 218 in the transmitters represented by the solid circles in FIG. 7 can disable the power amplifier 214 therein.

In some embodiments, each of the decoders 218 may include a memory (e.g., RAM or ROM) for storing its configurations corresponding to different control codes. With the aid of the encoder 242 and the decoders 218, each power amplifier 214 within the transmitters 210_1 to 210_P can be independently controlled, allowing the selection of the desired portion of transmitters 210_1 to 210_P to transmit the RF signals. However, the present disclosure is not limited thereto. In some embodiments, other schemes may be adopted to select the desired transmitters among the transmitters 210_1 to 210_P for performing amplification and transmission.

In the present embodiment, the power amplifiers 214 in the selected portion of transmitters 210_1 to 210_P will all enter the saturation mode during the amplification regardless of the amplitudes of the symbols. In such case, since distortion caused by the power amplifier 214 operating in the saturation mode can be measured in advance, such distortion can be compensated during the generation of the RF signal, thereby improving a precision of signal synthesis. For example, in some embodiments, the signal generation unit 250 may include a waveform generator 252 and a digital pre-distortion (DPD) controller 254. In the present embodiment, the waveform generator 252 can generate a digital waveform of the RF signal $SIG_{RF1}$ (or $SIG_{RF2}$) according to the symbol SMB1 (or SMB2), and the digital pre-distortion controller 254 can adjust the digital waveform to compensate the non-linear distortion expected to be caused by the power amplifiers 214 in the selected portion of transmitters 210_1 to 210_P operating in the saturation mode. As a result, an issue with the symbols having higher amplitudes being moved inward in the constellation diagram as shown in FIG. 4 can be mitigated.

In some embodiments, the signal generation unit 250 may further include some other circuits, such as a digital-to-analog converter (DAC) and a mixer. The DAC may convert the digital waveform adjusted by the DPD controller 254 into an analog signal, and the analog signal can be mixed with a higher-frequency carrier signal by the mixer so as to shift the combined signal to an appropriate frequency band for transmission. In some embodiments, the mixer may be replaced by a direct digital synthesizer (DDS) along with a digital up/down converter. In addition, the signal generation unit 250 may further include some other circuits, such as filters, according to requirements. Such circuits are, however, omitted from FIG. 5 for brevity.

Furthermore, a block diagram shown in FIG. 5 is for illustration purposes and is not intended to limit implementation of the present disclosure. In some embodiments, the data generator 220, the modulator 230, the digitized control unit 240, and the signal generation unit 250 may be implemented by application specific integrated circuits or processors that can execute the aforementioned functions. That is, the functionalities described in the present disclosure can be implemented in different ways and integrated into circuits that are not explicitly shown in the figures. The invention encompasses any circuit configuration that performs the described functions, whether or not explicitly illustrated.

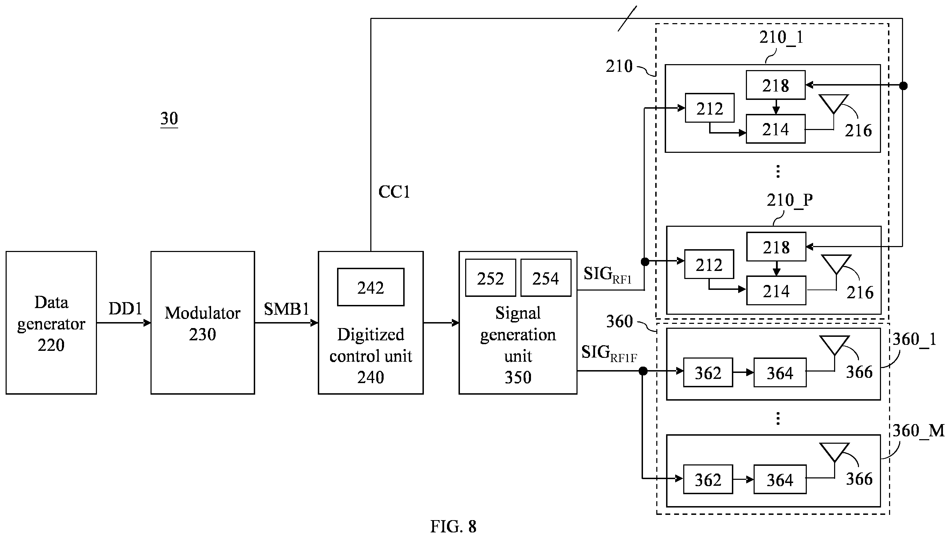

FIG. 8 shows a communication system 30 according to another embodiment of the present disclosure. The communication system 30 is different from the communication system 20 in that the communication system 30 further includes a fine-tuning subarray 360, which includes a plurality of transmitters 360_1 to 360_M. In the present embodiment, while the transmitters 210_1 to 210_P in the digitized subarray 210 can produce a majority of output power corresponding to the symbol to be transmitted, the transmitters 360_1 to 360_M in the fine-tuning subarray can work alongside the digitized subarray 210 for adjusting the signal with finer control. In some embodiments, the transmitters 360_1 to 360_M may dynamically operate in a full power range (including the linear mode and the saturation mode) to refine the waveform accuracy and optimize a beam pattern.

In such case, when the communication system 30 is requested to transmit the symbol SMB1, the signal generation unit 350 can generate the RF signal $SIG_{RF1}$ and provide the RF signal $SIG_{RF1}$ to the transmitters 210_1 to 210_P according to the symbol SMB1, and can generate an RF signal $SIG_{RF1F}$ and provide the RF signal $SIG_{RF1F}$ to the transmitters 360_1 to 360_M for transmission and amplification according to the symbol SMB1 and a difference between the amplitude of the symbol SMB1 and an amplitude contributed by the selected portion of transmitters 210_1 to 210_P, thereby optimizing a waveform of the overall RF output signal outputted by the communication system 30.

In some embodiments, the transmitters 360_1 to 360_M can be enabled collectively for transmitting a same RF signal $SIG_{RF1F}$ with different phases. For example, as shown in FIG. 8, each of the transmitters 360_1 to 360_M may include a phase shifter 362, a power amplifier 364, and an antenna element 366. The phase shifter 362 can shift a phase of the RF signal $SIG_{RF1F}$ before the transmission according to a desired radiation pattern so as to achieve beam steering. The power amplifier 364 can amplify the RF signal $SIG_{RF1F}$ in a full power range, and the antenna element 366 can transmit the RF signal $SIG_{RF1F}$ amplified by the power amplifier 364. In some embodiments, since the power amplifiers 364 of the transmitters 360_1 to 360_M can operate in the linear mode without entering the saturation mode, the power amplifiers 364 can contribute to the amplitude of the overall RF output signal in a finer manner, thereby improving a signal accuracy of the communication system 30.

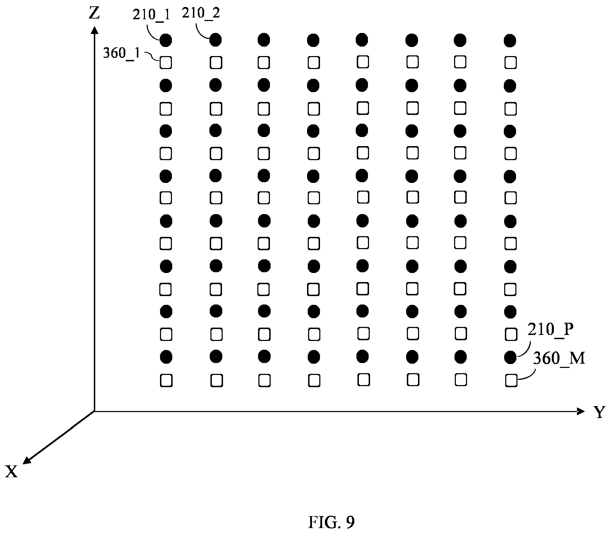

FIG. 9 shows a distribution of the transmitters 210_1 to 210_P in the digitized subarray 210 and the transmitters 360_1 to 360_M in the fine-tuning subarray according to some embodiments of the present disclosure. As shown in FIG. 9, there are 64 transmitters 210_1 to 210_P and 64 transmitters 360_1 to 360_M. That is, M and P are both 64. Also, the transmitters 360_1 to 360_M are interleaved with the transmitters 210_1 to 210_P so as to present an even distribution. However, the distribution shown in FIG. 9 is for illustrative purpose and is not for limiting the present disclosure. In some other embodiments, M can be different from P, and the transmitters 210_1 to 210_P and the transmitters 360_1 to 360_M may be arranged in a different spatial configuration.

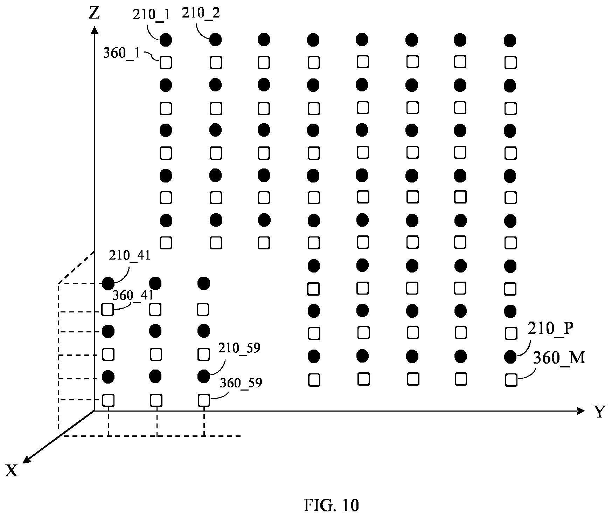

For example, some of the transmitters 210_1 to 210_P and/or the transmitters 360_1 to 360_M may be located on different planes than others. For example, FIG. 10 shows a distribution of the transmitters 210_1 to 210_P in the digitized subarray and the transmitters 360_1 to 360_M in the fine-tuning subarray according to another embodiment of the present disclosure. As shown in FIG. 10, some transmitters in the transmitters 210_1 to 210_P and 360_1 to 360_M (e.g., transmitters 210_1, 210_2, 360_1, 210_P, and 360_M) are disposed on one plane, while some other transmitters in the transmitters 210_1 to 210_P and 360_1 to 360_M (e.g., transmitters 210_41, 210_59, 360_41, and 360_59) are disposed on another plane. In other words, positions of the transmitters 210_1 to 210_P and 360_1 to 360_M can be arranged among 3-dimensional space according to requirements.

In the communication system 30, since both the digitized subarray 210 formed by the transmitters 210_1 to 210_P and the fine-tuning subarray 360 formed by the transmitters 360_1 to 360_M are adopted, the communication system 30 is able to improve both a power efficiency and a precision of signal synthesis.

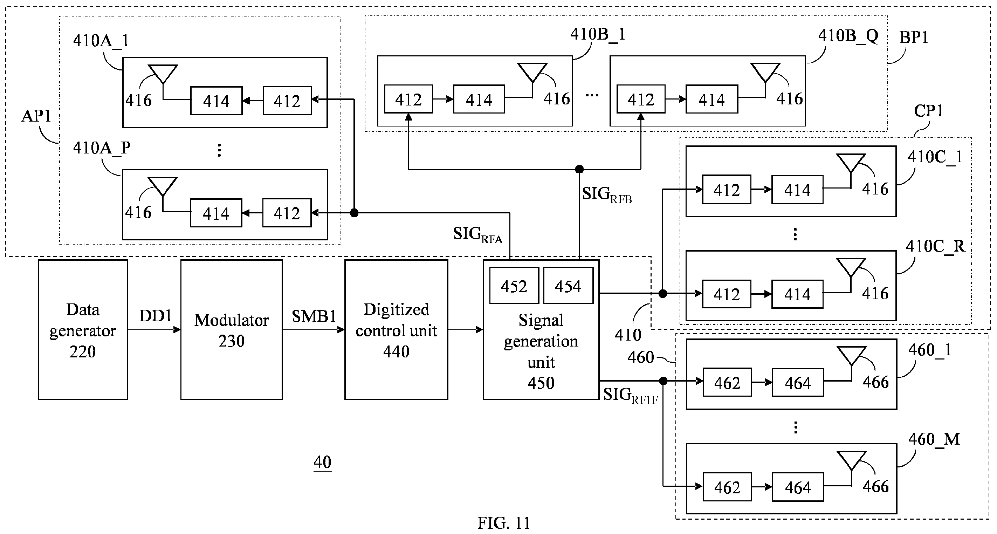

FIG. 11 shows a communication system 40 according to another embodiment of the present disclosure. The communication system 40 is different from the communication system 30 in that transmitters in the digitized subarray 410 include different portions that are mutually exclusive, and transmitters in a same portion can be controlled collectively. For example, the digitized subarray 410 includes transmitters 410A_1 to 410A_P of a first portion AP1, transmitters 410B_1 to 410B_Q of a second portion BP1, and transmitters 410C_1 to 410C_R of a third portion CP1, where P, Q and R are integers. Furthermore, in the present embodiment, a number of the transmitters in the first portion AP1 can be two times a number of the transmitters in the second portion BP1, and the number of the transmitters in the second portion BP1 can be two times a number of the transmitters in the third portion CP1. That is, P can be two times Q, and Q can be two times R. However, the present disclosure is not limited thereto. In some other embodiments, the digitized subarray 410 may further include more portions of transmitters.

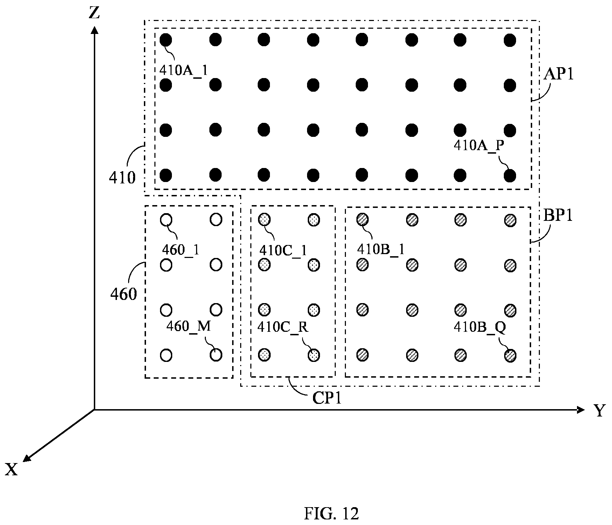

FIG. 12 shows a distribution of the transmitters in the digitized subarray 410 and a fine-tuning subarray 460 of the communication system 40 according to one embodiment of the present disclosure. In the embodiment shown in FIG. 12, P is equal to 32, Q is equal to 16, and R is equal to 8. Furthermore, power amplifiers 414 in the transmitters of the digitized array 410 may have a same specification. For example, a maximum output power provided by each of the transmitters 410A_1 to 410A_P in the first portion AP1, a maximum output power provided by each of the transmitters 410B_1 to 410B_Q in the second portion BP1, and a maximum output power provided by each of the transmitters 410C_1 to 410C_R in the third portion CP1 may be substantially same. In such case, the three portions AP1, BP1, and CP1 of the transmitters can be controlled as a 3-bit binary code with the first portion AP1 (including the transmitters 410A_1 to 410A_P) representing the first most significant bit (MSB), the second portion BP1 (including the transmitters 410B_1 to 410B_Q) representing the second MSB, and the third portion CP1 (including the transmitters 410C_1 to 410C_R) representing the third MSB (i.e., the least significant bit in this case). For example, a binary code "111" may imply a request to enable the transmitters in all three portions AP1, BP1, and CP1, a binary code "110" may imply a request to enable the transmitters in the first portion AP1 and the second portion BP1, a binary code "011" may imply a request to enable transmitters in the second portion BP1 and the third portion CP1, and so on.

In the communication system 40, the digitized control unit 440 can select required portions of the transmitters according to an amplitude of the symbol to be transmitted with a quantization process.

For example, the digitized control unit 440 may first determine whether to select the transmitters 410A_1 to 410A_P of the first portion AP1 by checking a first condition: $AS > \dfrac{N1}{NT}$ , where AS is the amplitude AS of the symbol SMB1 to be transmitted. In the present embodiment, AS is between 0 and 1. In addition, N1 is the number of transmitters in the first portion AP1 (in this case, N1 = P), and NT is the total number of the transmitters in the digitized subarray 410 of the communication system 40 (in this case, NT = P + Q + R ). In the present embodiment, since a maximum output power provided by each of the power amplifiers 414 in the transmitters of the three portions AP1, BP1, and CP1 are substantially same, and the power amplifiers 414 in the transmitters of the three portions AP1, BP1, and CP1 will all enter the saturation mode to provide full power when selected for amplification, a term $\dfrac{N1}{NT}$ may indicate an amplitude contributed by the transmitters 410A_1 to 410A_P of the first portion AP1. In such case, if the first condition is satisfied, it may imply that the amplitude of the symbol SMB1 is greater than a maximum amplitude contributed by the transmitters 410A_1 to 410A_P of the first portion AP1, and thus, the transmitters 410A_1 to 410A_P of the first portion AP1 will be selected. Otherwise, the transmitters 410A_1 to 410A_P of the first portion AP1 will not be selected.

Secondly, the digitized control unit 440 may determine whether to select the transmitters 410B_1 to 410B_Q of the second portion BP1 by checking a second condition: $AS - (A1 \times \frac{N1}{NT}) > \frac{N2}{NT}$, where N2 is the number of transmitters in the second portion BP1 (in this case, N2 = Q), and A1 is to indicate whether the transmitters 410A_1 to 410A_P of the first portion AP1 are selected. Specifically, the amplitude A1 is set to 1 when the transmitters 410A_1 to 410A_P of the first portion AP1 are selected, and the amplitude A1 is set to 0 when the transmitters 410A_1 to 410A_P of the first portion AP1 are not selected. In such case, if the second condition is satisfied, it may imply that the amplitude of the symbol SMB1 minus the amplitude contributed by the transmitters 410A_1 to 410A_P of the first portion AP1 is greater than a maximum amplitude contributed by the transmitters 410B_1 to 410B_Q of the second portion BP1, and thus, the transmitters 410B_1 to 410B_Q of the second portion BP1 will be selected. Otherwise, the transmitters 410B_1 to 410B_Q of the second portion BP1 will not be selected.

Similarly, the digitized control unit 440 may further determine whether to select the transmitters of the $k^{th}$ portion by checking a $k^{th}$ condition: $AS - \sum_{i=1}^{k-1}(Ai \times \frac{Ni}{NT}) > \frac{Nk}{NT}$, where Ai is to indicate whether the transmitters of the $i^{th}$ portion are selected or not. Specifically, Ai is set to 1 if the transmitters of the $i^{th}$ portion are selected, and Ai is set to 0 if the transmitters of the $i^{th}$ portion are not selected. Ni is a number of transmitters in the $i^{th}$ portion, and Nk is a number of transmitters in the $k^{th}$ portion. For example, to determine whether to select the transmitters 410C_1 to 410C_R of the third portion CP1, the digitized control unit 440 may check a third condition: $AS - \sum_{i=1}^{2}(Ai \times \frac{Ni}{NT}) > \frac{N3}{NT}$, where N3 is equal to R. In such case, if the third condition is satisfied, then the transmitters 410C_1 to 410C_R of the third portion CP1 will be selected; otherwise, the transmitters 410C_1 to 410C_R of the third portion CP1 will not be selected.

In some embodiments, after the digitized control unit 440 selects the required portion(s) of transmitters for performing amplification and transmission, the signal generation unit 450 will generate RF signals for the selected portions of transmitters so as to ensure that the power amplifiers 414 in the selected portions of transmitters will enter the saturation mode, thereby delivering the maximum output power and enhancing the power efficiency of the communication system 40.

For example, when the transmitters 410A_1 to 410A_P of the first portion AP1 and the transmitters 410B_1 to 410B_Q of the second portion are selected for performing amplification and transmission, the signal generation unit 450 can generate an RF signal $SIG_{RFA}$ and provide the RF signal $SIG_{RFA}$ to the transmitters 410A_1 to 410A_P of the first portion AP1, and can generate an RF signal $SIG_{RFB}$ and provide the RF signal $SIG_{RFB}$ to the transmitters 410B_1 to 410B_Q of the second portion BP1 according to the symbol SMB1 to be transmitted, while ensuring that the power amplifiers 414 in the transmitters 410A_1 to 410A_P of the first portion AP1 and the transmitters 410B_1 to 410B_Q of the second portion BP1 enter the saturation mode.

In the present embodiment, if the transmitters 410C_1 to 410C_R of the third portion CP1 are not selected, the signal generation unit 450 will not generate an RF signal or may output a zero signal to the transmitters 410C_1 to 410C_R of the third portion CP1. In such case, the transmitters 410C_1 to 410C_R of the third portion CP1 will not contribute to the amplification and transmission. In other words, in the communication system 40, the digitized control unit 440 can select the desired portion(s) of transmitters by having the signal generation unit 450 generate corresponding RF signals and provide the corresponding RF signals to those selected portions of transmitters.

In the present embodiment, each of the transmitters 410A_1 to 410A_P, 410B_1 to 410B_Q, and 410C_1 to 410C_R includes a phase shifter 412, a power amplifier 414, and an antenna element 416. Since the power amplifier 414 in the selected portion of transmitters will enter a saturation mode during amplification, a distortion caused by the power amplifier 414 operating in the saturation mode can be predicted, and thus can be compensated. For example, in some embodiments, the signal generation unit 450 may include a waveform generator 452 and a digital pre-distortion controller 454. In the present embodiment, the waveform generator 452 can generate the digital waveforms of the RF signal $SIG_{RFA}$ and the RF signal $SIG_{RFB}$ according to the symbol SMB1 to be transmitted, and the digital pre-distortion controller 454 can adjust the digital waveforms to compensate non-linear distortion expected to be caused by the power amplifiers 414 in the selected portion of transmitters (e.g., the transmitters 410A_1 to 410A_P of the first portion AP1 and the transmitters 410B_1 to 410B_Q of the second portion BP1) operating in the saturation mode. As a result, an issue with the symbols having higher amplitudes being moved inward in the constellation diagram as shown in FIG. 4 can be mitigated.

Furthermore, in the present embodiment, the communication system 40 may further include a plurality of transmitters 460_1 to 460_M configured as a fine-tuning subarray 460 that works alongside the digitized subarray 410 for adjusting the signal with finer control. In some embodiments, the transmitters 460_1 to 460_M may dynamically operate in a full power range (including the linear mode and the saturation mode) to refine a waveform accuracy and optimize a beam pattern.

For example, when the communication system 40 is requested to transmit the symbol SMB1, the signal generation unit 450 may not only generate the RF signals $SIG_{RFA}$ and $SIG_{RFB}$ and provide the RF signals $SIG_{RFA}$ and $SIG_{RFB}$ to the first portion AP1 and the second portion BP1 of the digitized subarray 410 that have been selected for amplification and transmission, but may also generate an RF signal $SIG_{RF1F}$ and provide the RF signal $SIG_{RF1F}$ to the transmitters 460_1 to 460_M of the fine-tuning subarray 460 for transmission and amplification. The signal generation unit 450 may generate the RF signal $SIG_{RF1F}$ for the transmitters 460_1 to 460_M of the fine-tuning subarray 460 according to the symbol SMB1 and the difference between the amplitude of the symbol SMB1 and an amplitude contributed by the selected portions of transmitters (e.g., the transmitters 410A_1 to 410A_P of the first portion AP1 and the transmitters 410B_1 to 410B_Q of the second portion BP1), thereby optimizing the waveform of the overall RF output signal outputted by the communication system 40.

In some embodiments, a power amplifier 464 of the transmitters 460_1 to 460_M in the fine-tuning array 460 can have a same specification as the power amplifier 414 of the transmitters 410A_1 to 410A_P, 410B_1 to 410B_Q, and 410C_1 to 410C_R in the digitized array 410. In such case, the maximum output power provided by each of the transmitters 410A_1 to 410A_P, 410B_1 to 410B_Q, and 410C_1 to 410C_R in the digitized array 410 and the maximum output power provided by each of the transmitters 460_1 to 460_M in the fine-tuning array 460 may be substantially same. In some embodiments, the transmitters 460_1 to 460_M, 410A_1 to 410A_P, 410B_1 to 410B_Q, and 410C_1 to 410C_R can have identical structures.

For example, each of the transmitters 460_1 to 460_M may include a phase shifter 462, a power amplifier 464, and an antenna element 466. In such case, the transmitters 460_1 to 460_M can be enabled collectively for transmitting a same RF signal $SIG_{RF1F}$ with different phases. Specifically, the phase shifter 462 can shift a phase of the RF signal $SIG_{RF1F}$ before transmission according to a desired radiation pattern so as to achieve beam steering. The power amplifier 464 can amplify the RF signal $SIG_{RF1F}$ in a full power range (including the linear mode and the saturation mode), and the antenna element 466 can amplify the RF signal $SIG_{RF1F}$ amplified by the power amplifier 464. In some embodiments, according to the RF signal $SIG_{RF1F}$, the power amplifiers 464 of the transmitters 460_1 to 460_M can operate in the linear mode without entering the saturation mode, so that the power amplifiers 464 can contribute to an amplitude of the overall RF output signal outputted by the communication system 40 in a finer manner, thereby improving a signal accuracy of the communication system 40.

In some embodiments, the amplitude AF contributed by the transmitters 460_1 to 460_M can be calculated by formulas (1) to (3) below.

$$AD\_total = \sum_{i=1}^{NT}\left( Ai \times \frac{Ni}{NT}\right) \qquad\qquad \text{formula (1)}$$

$$\Delta A = AS - AD\_total \qquad\qquad \text{formula (2)}$$

$$AF = \Delta A \times \frac{NT}{NF} \qquad\qquad \text{formula (3)}$$

In formula (1), Ai represents an amplitude contributed by the $i^{th}$ portion of transmitters in the digitized subarray 410, Ni represents a number of the transmitters in the $i^{th}$ portion of transmitters in the digitized subarray 410, NT represents a total number of all the transmitters in the digitized subarray 410 (in this case, NT=P+Q+R), and AD_total represents a total amplitude contributed by all the selected portion(s) of the transmitters in the digitized subarray 410.

In formula (2), AS represents an amplitude of the symbol to be transmitted, and $\Delta A$ represents a total amplitude required to be contributed by all the transmitters 460_1 to 460_M in the fine-tuning subarray.

In formula (3), NF represents a number of the transmitters in the fine-tuning subarray 460 (in this case, NF=M).

In other words, after the digitized control unit 440 selects required portion(s) of the transmitters in the digitized subarray 410, the amplitude contributed by the transmitters in the fine-tuning subarray 460 can be determined. Accordingly, the signal generation unit 450 can generate the RF signal(s) for transmitters of the selected portion(s) in the digitized subarray 410 and the RF signal for transmitters in the fine-tuning subarray 460, thereby allowing the communication system 40 to operate with high power efficiency while maintaining precision of the final output signal.

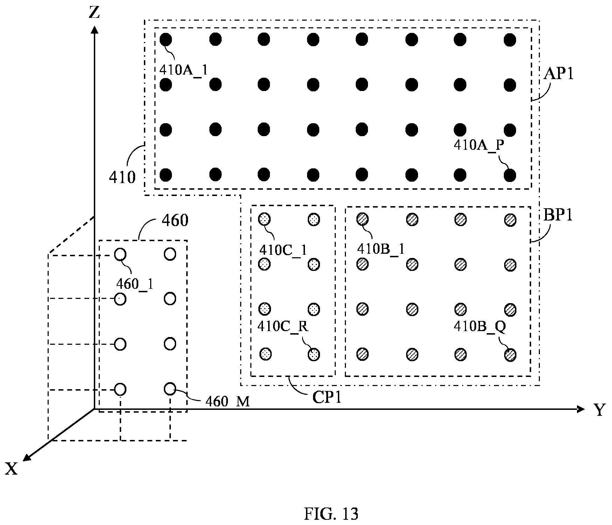

FIG. 12 shows a distribution of the transmitters in the digitized subarray 410 and the fine-tuning subarray 460 according to some embodiments of the present disclosure. As shown in FIG. 12, each of the portions AP1, BP1 and CP1 in the digitized subarray 410 is arranged in a block, and the transmitters 460_1 to 460_M in the fine-tuning subarray are also arranged in a block. Furthermore, the transmitters 410A_1 to 410A_P, 410B_1 to 410B_Q, 410C_1 to 410C_R and 460_1 to 460_M are all disposed on a same plane. However, the present disclosure is not limited thereto. In some embodiments, the transmitters 410A_1 to 410A_P, 410B_1 to 410B_Q, 410C_1 to 410C_R and 460_1 to 460_M may be disposed on different planes. For example, FIG. 13 shows a distribution of transmitters in the digitized subarray 410 and the fine-tuning subarray 460 according to another embodiment of the present disclosure. As shown in FIG. 13, the transmitters 460_1 to 460_M in the fine-tuning subarray 460 can be disposed on one plane while the transmitters 410A_1 to 410A_P, 410B_1 to 410B_Q, and 410C_1 to 410C_R in the digitized subarray 410 can be disposed on another plane.

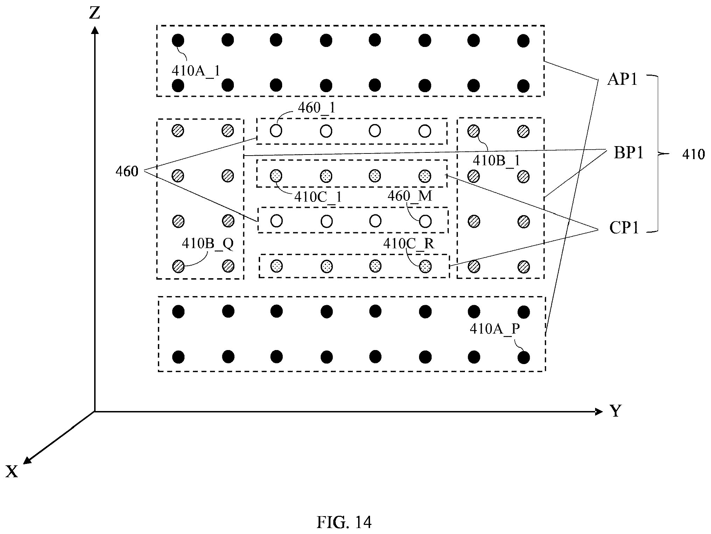

Furthermore, in some embodiments, transmitters of a same portion in the digitized array 410 can be disposed in separate regions, and transmitters in the fine-tuning array 460 can also be disposed in separate regions. FIG. 14 shows a distribution of transmitters in the digitized subarray 410 and the fine-tuning subarray 460 according to another embodiment of the present disclosure. As shown in FIG. 14, the transmitters 410A_1 to 410A_P of the first portion AP1 are distributed in two separate blocks, the transmitters 410B_1 to 410B_Q of the second portion BP1 are distributed in two separate blocks, the transmitters 410C_1 to 410C_R of the third portion CP1 are distributed in two separate blocks, and the transmitters of the fine-tuning subarray 460 are also distributed in two separate blocks. That is, the positions of the transmitters 410A_1 to 410A_P, 410B_1 to 410B_Q, 410C_1 to 410C_R, and 460_1 to 460_M can be arranged in a manner to facilitate beamforming and are not restricted to specific configurations.

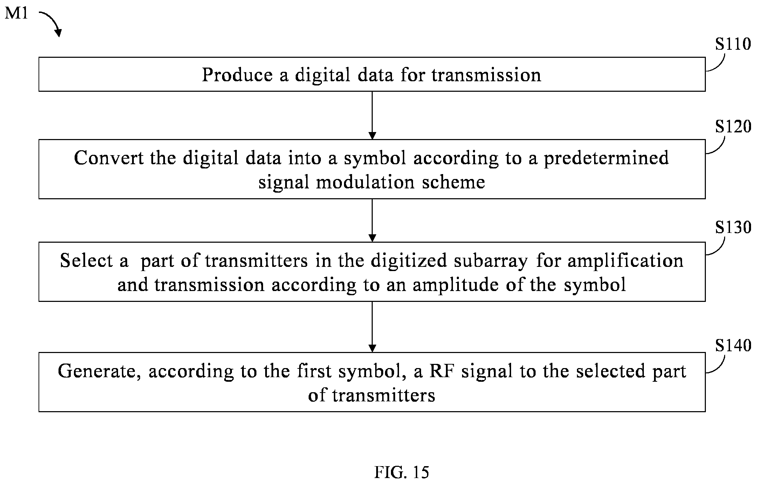

FIG. 15 shows a flowchart of a method M1 for signal transmission according to one embodiment of the present disclosure. In some embodiments, the method M1 can be performed with the communication system 20, 30, or 40. For example, when the communication system 20 is adopted for performing the signal transmission according to the method M1, the data generator 220 can produce the digital data DD1 in step S110, and the modulator 230 can convert the digital data DD1 into the signal symbol SMB1 in step S120. Subsequently, in step S130, the digitized control unit 240 can select a portion of transmitters in the digitized subarray 210 for performing amplification and transmission according to an amplitude of the symbol SMB1. In step S140, the signal generator 250 can generate an RF signal $SIG_{RF1}$ and provide the RF signal $SIG_{RF1}$ to the selected portion of transmitters in the digitized subarray 210. In some embodiments, the signal generator 250 can generate the RF signal $SIG_{RF1}$ and provide the RF signal $SIG_{RF1}$ to the selected portion of transmitters so as to ensure that power amplifiers 214 in the selected portion of transmitters in the digitized subarray 210 can enter a saturation mode during amplification, thereby enhancing a power efficiency of the communication system 20.

In some embodiments, to compensate the distortion caused by the power amplifiers 214 of the selected portion of transmitters due to operating in the saturation mode, the signal generator 250 may adjust the digital waveform with the digital pre-distortion controller 254. As a result, the communication system 20 can operate with high power efficiency while maintaining precision of the final output signal.

In some embodiments, if the communication system 30 is adopted to perform the method M1, the communication system 30 may further generate an RF signal $SIG_{RF1F}$ and provide the RF signal $SIG_{RF1F}$ to the transmitters 360_1 to 360_M in the fine-tuning subarray 360 according to the symbol SMB1 and a difference between the amplitude of the symbol SMB1 and an amplitude contributed by the selected portion of transmitters in the digitized subarray 210, so as to optimize a waveform of an overall RF output signal outputted by the communication system 30.

In some embodiments, if the communication system 40 is adopted to perform the method M1, the communication system 40 may select required portions of the transmitters in the digitized subarray 410 according to an amplitude of the symbol to be transmitted. For example, the digitized control unit 440 may select transmitters of the three portions AP1, BP1 and CP1 in a quantization scheme with the amplifiers in the selected portions of transmitters amplifying the RF signals with their full power in the saturation mode.

In summary, the communication systems and the methods for signal transmission provided by the embodiments of the present disclosure can control the transmitters of the digitized subarray in a digital manner, so that amplifiers in the selected transmitters of the digitized subarray can enter the saturation mode during amplification, thereby enhancing the power efficiency. Furthermore, the communication systems and the methods for signal transmission provided by the embodiments of the present disclosure can also control the transmitters of the fine-tuning subarray to operate in a full power range so as to optimize a waveform of the overall RF output signal. As a result, the power efficiency of the communication system can be improved without losing precision of signal synthesis.

Although the present disclosure and its advantages have been described in detail, it should be understood that various changes, substitutions and alterations can be made herein without departing from the spirit and scope of the disclosure as defined by the appended claims. For example, many of the operations discussed above can be implemented in different methodologies and replaced by other operations, or a combination thereof.

Moreover, the scope of the present application is not intended to be limited to the particular embodiments of the operation, machine, manufacture, composition of matter, means, methods and steps described in the specification. As one of ordinary skill in the art will readily appreciate from the present disclosure, operations, machines, manufacture, compositions of matter, means, methods, or steps, presently existing or later to be developed, that perform substantially the same function or achieve substantially the same result as the corresponding embodiments described herein, may be utilized according to the present disclosure. Accordingly, the appended claims are intended to include within their scope such operations, machines, manufacture, compositions of matter, means, methods, and steps.

**Claims**

1. A communication system, comprising:

   a digitized subarray comprising a plurality of first transmitters, each of the plurality of first transmitters comprising:

   a first power amplifier configured to amplify a radio frequency (RF) signal; and
   a first antenna element coupled to the first power amplifier and configured to transmit the RF signal amplified by the first power amplifier;

   a data generator configured to produce a first digital data for transmission;
   a modulator configured to convert the first digital data into a first symbol according to a predetermined signal modulation scheme;
   a digitized control unit configured to select a first portion of the plurality of first transmitters in the digitized subarray for performing amplification and transmission according to an amplitude of the first symbol; and
   a signal generation unit configured to, according to the first symbol, generate a first RF signal and provide the first RF signal to the first portion of the plurality of first transmitters.

2. The communication system of claim 1, wherein the signal generation unit is configured to generate the first RF signal according to the first symbol so as to ensure that first power amplifiers in the first portion of the plurality of first transmitters enter a saturation mode during amplification.

3. The communication system of claim 2, wherein:

   the digitized control unit comprises an encoder configured to generate a control code according to the amplitude of the first symbol;
   each of the plurality of first transmitters further comprises a decoder configured to determine whether to enable or disable the first power amplifier by decoding the control code; and
   the digitized control unit selects the first portion of the plurality of first transmitters by enabling the first power amplifiers in the first portion of the plurality of first transmitters with the control code.

4. The communication system of claim 2, wherein the signal generation unit comprises:

   a waveform generator configured to generate a digital waveform of the first RF signal according to the first symbol; and
   a digital pre-distortion controller configured to adjust the digital waveform to compensate a non-linear distortion expected to be caused by the first power amplifiers in the first portion of the plurality of first transmitters operating in the saturation mode.

5. The communication system of claim 2, further comprising a fine-tuning subarray comprising a plurality of second transmitters, wherein the signal generation unit is further configured to, according to the first symbol and a difference between the amplitude of the first symbol and an amplitude contributed by the first portion of first transmitters, generate a second RF signal and provide the second RF signal to the plurality of second transmitters for amplification and transmission so as to optimize a waveform of an overall RF output signal outputted by the communication system.

6. The communication system of claim 1, wherein the plurality of first transmitters comprise the first portion of the plurality of first transmitters and a second portion of the plurality of first transmitters, the first portion of the plurality of first transmitters and the second portion of the plurality of first transmitters are mutually exclusive, the first portion of the plurality of first transmitters are collectively controlled, and the second portion of the plurality of first transmitters are collectively controlled.

7. The communication system of claim 6, wherein a number of the first transmitters in the first portion of the plurality of first transmitters is two times a number of the first transmitters in the second portion of the plurality of first transmitters.

8. The communication system of claim 6, wherein:

   the digitized control unit is further configured to select the second portion of the plurality of first transmitters for performing amplification and transmission according to the amplitude of the first symbol; and

the signal generation unit is further configured to generate a second RF signal and provide the second RF signal to the second portion of the plurality of first transmitters in the digitized subarray according to the first symbol so as to ensure that the first power amplifiers in the first portion of the plurality of first transmitters and first power amplifiers in the second portion of the plurality of first transmitters enter a saturation mode during amplification.

9. The communication system of claim 6, wherein:

the digitized control unit selects the first portion of the plurality of first transmitters in the digitized subarray when an amplitude of the first symbol is greater than a first maximum amplitude contributed by the first portion of the plurality of first transmitters;
the digitized control unit selects both the first portion of the plurality of first transmitters and the second portion of the plurality of first transmitters in the digitized subarray when the amplitude of the first symbol minus the first maximum amplitude is greater than a second maximum amplitude contributed by the second portion of the plurality of first transmitters; and

10. The communication system of claim 9, further comprising a fine-tuning subarray comprising a plurality of second transmitters, wherein the signal generation unit is further configured to, when the digitized control unit selects both the first portion of the plurality of first transmitters and the second portion of the plurality of first transmitters in the digitized subarray, according to the first symbol and a difference between the amplitude of the first symbol and an amplitude contributed by the first portion of the plurality of first transmitters and the second portion of the plurality of first transmitters, generate a third RF signal and provide the third RF signal to the plurality of second transmitters for amplification and transmission, so as to optimize a waveform of an overall RF output signal outputted by the communication system, and power amplifiers of the plurality of second transmitters are configured to amplify the third RF signal in a full power range.

11. A method for signal transmission using a communication system, wherein the communication system comprises a digitized subarray comprising a plurality of first transmitters, each of the plurality of first transmitters comprises a first power amplifier and a first antenna element coupled to the first power amplifier, and the method comprises:

producing a first digital data for transmission;
converting the first digital data into a first symbol according to a predetermined signal modulation scheme;
selecting a first portion of the plurality of first transmitters in the digitized subarray for performing amplification and transmission according to an amplitude of the first symbol; and
generating, according to the first symbol, a first radio frequency (RF) signal and providing the first RF signal to the first portion of the plurality of first transmitters.

12. The method of claim 11, wherein the step of generating, according to the first symbol, the first RF signal and providing the first RF signal to the first portion of the plurality of first transmitters comprises:
generating the first RF signal according to the first symbol so as to ensure that the first power amplifiers in the first portion of the plurality of first transmitters enter a saturation mode during amplification.

13. The method of claim 12, wherein the step of generating, according to the first symbol, the first RF signal and providing the first RF signal to the first portion of the plurality of first transmitters further comprises:

generating a digital waveform of the first RF signal according to the first symbol; and
adjusting the digital waveform to compensate a non-linear distortion expected to be caused by the first power amplifiers in the first portion of the plurality of first transmitters operating in the saturation mode.

14. The method of claim 12, wherein the communication system further comprises a fine-tuning subarray comprising a plurality of second transmitters, and the method further comprises:
generating a second RF signal and providing the second RF signal to the plurality of second transmitters in the fine-tuning subarray for amplification and transmission according to the first symbol and a difference between the amplitude of the first symbol and an amplitude contributed by the first portion of first transmitters, so as to optimize a waveform of an overall RF output signal outputted by the communication system.

15. The method of claim 11, wherein:

the plurality of first transmitters comprise the first portion of the plurality of first transmitters and a second portion of the plurality of first transmitters;

the first portion of the plurality of first transmitters and the second portion of the plurality of first transmitters are mutually exclusive,

the first portion of the plurality of first transmitters are collectively controlled, and the second portion of the plurality of first transmitters are collectively controlled;

a number of the first transmitters in the first portion of the plurality of first transmitters is two times a number of the first transmitters in the second portion of the plurality of first transmitters; and

the method further comprising:

selecting the first portion of the plurality of first transmitters and the second portion of the plurality of first transmitters in the digitized subarray for performing amplification and transmission when the amplitude of the first symbol minus a first maximum amplitude contributed by the first portion of the plurality of first transmitters is greater than a second maximum amplitude contributed by the second portion of the plurality of first transmitters.

FIG. 1

FIG. 2

FIG. 3

FIG. 4

FIG. 5

FIG. 6

210_1 210_2

210_P

FIG. 7

FIG. 8

FIG. 9

FIG. 10

FIG. 11

FIG. 12

FIG. 13

FIG. 14

M1

| | S110 |
|---|---|
| Produce a digital data for transmission | |

| | S120 |
|---|---|
| Convert the digital data into a symbol according to a predetermined signal modulation scheme | |

| | S130 |
|---|---|
| Select a part of transmitters in the digitized subarray for amplification and transmission according to an amplitude of the symbol | |

| | S140 |
|---|---|
| Generate, according to the first symbol, a RF signal to the selected part of transmitters | |

FIG. 15

**EUROPEAN SEARCH REPORT**

Application Number

EP 25 19 1478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 073 572 A1 (INTEL IP CORP [US]) 28 September 2016 (2016-09-28) * paragraph [0012] - paragraph [0037]; figures 1,2 * * paragraph [0041] - paragraph [0047]; figure 5 * * paragraph [0059] - paragraph [0068]; figure 11 * | 1-15 | INV. H04B1/04 |
| A | EP 3 261 266 A1 (INTEL CORP [US]) 27 December 2017 (2017-12-27) * paragraph [0014] - paragraph [0087]; figures 1-5 * | 1-15 | |
| A | LI JIAYU ET AL: "Performance Analysis of Directional Modulation With Finite-Quantized RF Phase Shifters in Analog Beamforming Structure", IEEE ACCESS, vol. 7, 31 July 2019 (2019-07-31), pages 97457-97465, XP011737355, DOI: 10.1109/ACCESS.2019.2929549 [retrieved on 2019-07-31] * the whole document * | 1-15 | TECHNICAL FIELDS SEARCHED (IPC) H04B |

The present search report has been drawn up for all claims

| Place of search | Date of completion of the search | Examiner |
|---|---|---|
| Munich | 15 January 2026 | Ayala Perriello, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 1478

This annex lists the patent family members relating to the patent documents cited in  the above-mentioned European search report.
The members are as contained in the European Patent Office EDP file on
The European Patent Office is in no way liable for these particulars which are merely given for the purpose of information.

15-01-2026

| Patent document cited in search report | | Publication date | Patent family member(s) | | Publication date |
|---|---|---|---|---|---|
| EP 3073572 | A1 | 28-09-2016 | CN | 106027132 A | 12-10-2016 |
| | | | EP | 3073572 A1 | 28-09-2016 |
| | | | US | 2016285481 A1 | 29-09-2016 |
| EP 3261266 | A1 | 27-12-2017 | EP | 3261266 A1 | 27-12-2017 |
| | | | US | 9806777 B1 | 31-10-2017 |

EPO FORM P0459

For more details about this annex : see Official Journal of the European Patent Office, No. 12/82